# EUROPÄISCHE PATENTSCHRIFT

(11) **EP 3 653 021 B1**
(45) Veröffentlichungstag und Bekanntmachung des Hinweises auf die Patenterteilung: **30.11.2022**
(21) Anmeldenummer: 18740310.0
(22) Anmeldetag: 20.06.2018
(51) Int. Cl.: H05B 6/12, H05B 6/06, A47J 36/32, F24C 7/08

(54) **KOCHSYSTEM**
COOKING SYSTEM
SYSTÈME DE CUISSON

(30) Priorität: 11.07.2017 ES 201730913
(43) Veröffentlichungstag der Anmeldung: 20.05.2020
(73) Patentinhaber: BSH Hausgeräte GmbH, 81739 München (DE)
(72) Erfinder: LASOBRAS BERNAD, Javier, 50016 Ejea De Los Caballeros (Zaragoza) (ES); LLORENTE GIL, Sergio, 50009 Zaragoza (ES); MIR BEL, Jorge, 50019 Zaragoza (ES); RIVERA PEMAN, Julio, 50410 Cuarte de Huerva (Zaragoza) (ES)
(86) Internationale Anmeldenummer: PCT/IB2018/054537
(87) Internationale Veröffentlichungsnummer: WO 2019/012354

(56) Entgegenhaltungen:
- EP-A1- 2 532 972
- EP-A1- 2 693 127
- EP-A1- 2 876 976
- EP-A1- 3 096 586
- WO-A1-2015/068093
- WO-A1-2017/052282
- WO-A1-2017/103712
- DE-A1-102006 017 801

## Beschreibung

Betrieb eines Kochsystems nach dem Anspruch 13.

Aus dem Stand der Technik ist bereits eine Ausgestaltung mit einer Kochfeldplatte bekannt, welche einen Gargeschirraufstellbereich definiert. In einem Nahbereich des Gargeschirraufstellbereichs ist eine Anzeigeeinheit angeordnet, welche in einem Heizbetriebszustand eine Temperatur anzeigt und welche ein thermochromes Element umfasst.

EP 3 096 586 A1 (BSH HAUSGERÄTE GMBH [DE]) 23. November 2016 (2016-11-23) offenbart ein Kochsystem mit einem Gargeschirr, welches eine Gargeschirrversorgungseinheit zu einer Versorgung einer Ausgabeeinheit aufweist.

Die Aufgabe der Erfindung besteht insbesondere darin, eine gattungsgemäße Vorrichtung mit verbesserten Eigenschaften hinsichtlich eines Bedienkomforts bereitzustellen. Die Aufgabe wird erfindungsgemäß durch die Merkmale der Ansprüche 1 und 13 gelöst, während vorteilhafte Ausgestaltungen und Weiterbildungen der Erfindung den Unteransprüchen entnommen werden können.

Es wird ein Kochsystem vorgeschlagen mit zumindest einer Kochfeldplatte, welche zumindest einen Gargeschirraufstellbereich definiert, mit zumindest einer Anzeigeeinheit, welche bei einer senkrechten Betrachtung auf eine Haupterstreckungsebene der Kochfeldplatte wenigstens teilweise in einem Nahbereich des Gargeschirraufstellbereichs angeordnet ist, und mit zumindest einer Steuereinheit, die dazu vorgesehen ist, in wenigstens einem Betriebszustand die Anzeigeeinheit in Abhängigkeit von zumindest einem Bedienungsaufforderungsparameter zu betreiben.

Durch eine derartige Ausgestaltung kann insbesondere ein hoher Bedienkomfort erreicht werden. Insbesondere kann eine einfache und/oder intuitive Bedienung ermöglicht werden. Eine Zeit, welche zu einer Garung aufzuwenden ist, kann insbesondere gering gehalten werden, da ein Bediener insbesondere von der Steuereinheit mittels der Anzeigeeinheit ständig über anstehende von ihm durchzuführende Handlungen informiert wird, wodurch insbesondere zusätzlich eine Wahrscheinlichkeit eines Vergessens einer Handlung vermieden werden kann. Insbesondere kann einem gängigen Trend, welcher insbesondere in der Verwendung von Anzeigeeinheiten besteht, entsprochen werden, wodurch insbesondere eine Integration von neuartigen Eigenschaften in Bezug auf eine Bedienerfreundlichkeit und/oder eine Integration von neuartigen, mit Emotionen behafteten Eigenschaften erzielt werden kann.

Unter einem "Kochsystem" soll insbesondere ein System verstanden werden, welches zumindest eine Komponente eines Kochfelds und/oder zumindest ein Kochfeld und/oder zumindest eine Zubehöreinheit, welche zu einer Verwendung in Zusammenhang mit einem Kochfeld vorgesehen ist, und/oder zumindest ein Gargeschirr, welches zu einer Beheizung durch ein Kochfeld vorgesehen ist, aufweist.

Unter einer "Kochfeldplatte" soll insbesondere eine Einheit verstanden werden, die in wenigstens einem Betriebszustand zu einem Aufstellen von Gargeschirr vorgesehen ist und die insbesondere dazu vorgesehen ist, einen Teil eines Kochfeldaußengehäuses, insbesondere zumindest eines die Kochfeldplatte aufweisenden Kochfelds, auszubilden. Insbesondere bildet die Kochfeldplatte in einer Einbaulage einen einem Bediener zugewandten Teil des Kochfeldaußengehäuses aus. Die Kochfeldplatte besteht insbesondere wenigstens zu einem Großteil aus Glas und/oder Glaskeramik. Unter "wenigstens zu einem Großteil" soll insbesondere zu einem Anteil von mindestens 70 %, insbesondere von mindestens 80 %, vorteilhaft von mindestens 90 % und vorzugsweise von mindestens 95 % verstanden werden.

Unter einem "Gargeschirraufstellbereich" soll insbesondere ein zweidimensionaler Bereich verstanden werden, auf welchem in wenigstens einem Betriebszustand zumindest ein Gargeschirr zu einer Beheizung des Gargeschirrs aufstellbar ist und unter welchem bei einer senkrechten Betrachtung auf eine Haupterstreckungsebene der Kochfeldplatte in einer Einbaulage zumindest ein Heizelement, welches insbesondere in dem Betriebszustand das Gargeschirr beheizt, angeordnet ist. Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft.

Insbesondere weist das Kochsystem zumindest ein Heizelement und insbesondere zumindest zwei, vorteilhaft zumindest vier, besonders vorteilhaft zumindest acht, vorzugsweise zumindest zwölf und besonders bevorzugt eine Vielzahl an Induktionsheizelementen auf, welches/welche in einer Einbaulage insbesondere unterhalb der Kochfeldplatte angeordnet ist/sind. Insbesondere sind die Induktionsheizelemente in Form einer Matrix angeordnet. Unter einem "Induktionsheizelement" soll in diesem Zusammenhang insbesondere ein Element verstanden werden, welches dazu vorgesehen ist, Energie, vorzugsweise elektrische Energie, in Wärme umzuwandeln und insbesondere zumindest einem Gargeschirr zuzuführen. Vorteilhaft ist das Induktionsheizelement dazu vorgesehen, ein elektromagnetisches Wechselfeld insbesondere mit einer Frequenz zwischen 20 kHz und 100 kHz zu erzeugen, das insbesondere dazu vorgesehen ist, in einem aufgestellten, insbesondere metallischen, vorzugsweise ferromagnetischen Gargeschirrboden durch Wirbelstrominduktion und/oder Ummagnetisierungseffekte in Wärme umgewandelt zu werden.

Unter einer "Anzeigeeinheit" soll insbesondere eine Einheit verstanden werden, welche dazu vorgesehen ist, einem Bediener insbesondere zumindest optisch und/oder akustisch und/oder haptisch zumindest eine Kenngröße bereitzustellen. Die Kenngröße könnte beispielsweise eine Information und/oder eine Zeitangabe und/oder eine Bedienaufforderung und/oder eine Handlungsaufforderung sein. Vorteilhaft könnte die Anzeigeeinheit dazu vorgesehen sein, eine optische Ausgabe bereitzustellen, wie beispielsweise eine Anzeige wenigstens eines Bilds und/oder wenigstens eines Texts und/oder wenigstens einer Ziffer und/oder wenigstens einer Animation und/oder wenigstens einer Beleuchtung. Insbesondere könnte die Anzeigeeinheit zumindest ein Leuchtelement, vorteilhaft zumindest eine LED, und/oder insbesondere ein vorzugsweise hinterleuchtetes Display, insbesondere ein Matrixdisplay und/oder eine Flüssigkristallanzeige und/oder ein LCD-Display und/oder ein OLED-Display und/oder elektronisches Papier, aufweisen. Beispielsweise könnte die Anzeigeeinheit insbesondere zusätzlich dazu vorgesehen sein, wenigstens ein akustisches Signal und/oder insbesondere wenigstens eine akustische Sequenz auszugeben, wie beispielsweise einen Klingelton und/oder ein Warnsignal und/oder eine Aufforderung in Form eines insbesondere vorgefertigten Satzes. Beispielsweise könnte die Anzeigeeinheit zumindest ein Klangmittel aufweisen, welches insbesondere ein Lautsprecher sein könnte.

Die Anzeigeeinheit weist insbesondere zumindest drei, vorteilhaft zumindest vier, besonders vorteilhaft zumindest acht, vorzugsweise zumindest zwölf und besonders bevorzugt eine Vielzahl an Leuchtelementen auf. Insbesondere weist die Anzeigeeinheit maximal 100, insbesondere maximal 80, vorteilhaft maximal 60, besonders vorteilhaft maximal 50 und vorzugsweise maximal 40 Leuchtelemente auf.

Unter einem "Nahbereich" des Gargeschirraufstellbereichs soll insbesondere ein zweidimensionaler Bereich verstanden werden, welcher bei einer senkrechten Betrachtung auf eine Haupterstreckungsebene der Kochfeldplatte den Gargeschirraufstellbereich beinhaltet und welcher sich insbesondere in zumindest einer insbesondere beliebigen Richtung über eine Erstreckung von maximal 25 %, insbesondere von maximal 20 %, vorteilhaft von maximal 15 %, besonders vorteilhaft von maximal 10 % und vorzugsweise von maximal 5 % über eine maximale Erstreckung des Gargeschirraufstellbereichs in der Richtung hinaus erstreckt.

Unter der Wendung, dass die Anzeigeeinheit bei einer senkrechten Betrachtung auf eine Haupterstreckungsebene der Kochfeldplatte wenigstens "teilweise" in einem Nahbereich des Gargeschirraufstellbereichs angeordnet ist, soll insbesondere verstanden werden, dass die Anzeigeeinheit zumindest ein Leuchtelement aufweist, welches bei einer senkrechten Betrachtung auf eine Haupterstreckungsebene der Kochfeldplatte in dem Nahbereich des Gargeschirraufstellbereichs angeordnet ist, und dass die Anzeigeeinheit insbesondere zumindest ein weiteres Leuchtelement aufweisen könnte, welches bei einer senkrechten Betrachtung auf eine Haupterstreckungsebene der Kochfeldplatte außerhalb des Nahbereichs des Gargeschirraufstellbereichs angeordnet sein könnte.

Unter einer "Steuereinheit" soll insbesondere eine elektronische Einheit verstanden werden, die vorzugsweise dazu vorgesehen ist, zumindest die Anzeigeeinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Beispielsweise könnte die Steuereinheit in einer Steuer- und/oder Regeleinheit eines Kochfelds zumindest teilweise integriert sein.

Das Kochsystem könnte beispielsweise zumindest einen Sensor, insbesondere zumindest einen Temperatursensor, aufweisen, welcher insbesondere mit der Steuereinheit kommunizieren könnte und welcher insbesondere eine Temperatur von in dem Gargeschirraufstellbereich aufgestelltem Gargeschirr detektieren könnte. Die Steuereinheit könnte insbesondere zusätzlich mittels der Anzeigeeinheit zumindest einen weiteren Parameter und/oder zumindest eine weitere Information an einen Bediener ausgeben, wie beispielsweise eine Temperatur und/oder eine Heizleistung und/oder eine Aktivierung zumindest eines Sensors des Kochsystems.

Unter einem "Bedienungsaufforderungsparameter" soll insbesondere ein Parameter verstanden werden, mittels welchem die Steuereinheit einem Bediener über die Anzeigeeinheit zu einer Handlung und/oder Tätigkeit auffordert und/oder mittels welchem die Steuereinheit einem Bediener eine verbleibende Zeit, ab welcher eine Handlung und/oder Tätigkeit vorgenommen werden kann, über die Anzeigeeinheit ausgibt.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass das Kochsystem zumindest eine Versorgungseinheit aufweist, welche in dem Betriebszustand jedes Leuchtelement der Anzeigeeinheit einzeln mit Energie versorgt. Insbesondere ist jedes Leuchtelement der Anzeigeeinheit separat aktivierbar. Die Versorgungseinheit weist insbesondere für jedes Leuchtelement zumindest einen Stromkreis auf, welcher elektrisch von weiteren Stromkreisen für weitere Leuchtelemente getrennt ist. Unter einer "Versorgungseinheit" soll insbesondere eine Einheit verstanden werden, welche in wenigstens einem Betriebszustand, insbesondere in Abhängigkeit einer Ansteuerung der Versorgungseinheit durch die Steuereinheit, elektrische Energie an zumindest eine weitere Baueinheit, insbesondere an jedes Leuchtelement der Anzeigeeinheit, bereitstellt. Dadurch kann insbesondere eine hohe Flexibilität und/oder eine hohe Vielfalt an Gestaltungsmöglichkeiten geschaffen werden. Insbesondere kann eine Vielzahl verschiedener Anzeigemuster bereitgestellt werden, wodurch einem Bediener eine Vielzahl an Informationen übermittelt werden kann.

Zudem wird vorgeschlagen, dass das Kochsystem zumindest eine Aufstelleinheit aufweist, welche in dem Betriebszustand in dem Gargeschirraufstellbereich angeordnet ist. Unter einer "Aufstelleinheit" soll insbesondere eine Einheit verstanden werden, welche speziell zu einem Aufstellen in dem Gargeschirraufstellbereich vorgesehen ist, und zwar insbesondere in Bezug auf zumindest eine Materialbeschaffenheit und/oder auf eine Hitzebeständigkeit und/oder auf eine Größe. Insbesondere kann die Aufstelleinheit speziell für das Kochsystem ausgebildet und/oder für das Kochsystem vorgesehen sein. In dem Betriebszustand sind die Aufstelleinheit und der Gargeschirraufstellbereich bei einer senkrechten Betrachtung auf zumindest eine Haupterstreckungsebene der Kochfeldplatte überlappend miteinander angeordnet. Vorteilhaft beinhaltet der Gargeschirraufstellbereich bei einer senkrechten Betrachtung auf zumindest eine Haupterstreckungsebene der Kochfeldplatte in dem Betriebszustand die Aufstelleinheit. Dadurch kann insbesondere ein besonders hoher Bedienkomfort erzielt werden.

Weiterhin wird vorgeschlagen, dass die Aufstelleinheit zumindest ein Gargeschirr aufweist. Dadurch kann insbesondere eine optimale Garung und/oder Zubereitung von in dem Gargeschirr befindlichen Gargütern erzielt werden, wodurch insbesondere eine hohe Bedienerzufriedenheit und/oder eine geringe Rücklaufquote ermöglicht werden kann.

Beispielsweise könnte die Aufstelleinheit ausschließlich ein Gargeschirr aufweisen, wobei insbesondere auf eine Unterlegeinheit verzichtet werden könnte. Vorzugsweise weist die Aufstelleinheit, insbesondere alternativ oder zusätzlich zu dem Gargeschirr, zumindest eine Unterlegeinheit auf, welche in dem Betriebszustand zwischen zumindest einem Gargeschirr, welches insbesondere Teil der Aufstelleinheit und/oder von der Aufstelleinheit verschieden sein könnte, und der Kochfeldplatte angeordnet ist. Unter einer "Unterlegeinheit" soll insbesondere eine Einheit verstanden werden, welche insbesondere zu einem Aufstellen und/oder Auflegen, insbesondere zu einer Platzierung, auf der Kochfeldplatte und zu einem Aufstellen zumindest eines Gargeschirrs vorgesehen ist und welche insbesondere in dem Betriebszustand eine Unterlage für das beheizte Gargeschirr wenigstens teilweise ausbildet. In einer Einbaulage ist die Unterlegeinheit insbesondere zu einer Platzierung oberhalb der Kochfeldplatte vorgesehen. Unter der Wendung, dass die Unterlegeinheit in dem Betriebszustand "zwischen" zumindest einem Gargeschirr und der Kochfeldplatte angeordnet ist, soll insbesondere verstanden werden, dass eine kürzeste Verbindung zwischen einem insbesondere beliebigen Punkt des Gargeschirrs, insbesondere eines Gargeschirrbodens des Gargeschirrs, und der Kochfeldplatte durch die Unterlegeinheit führt und diese insbesondere zumindest einmal schneidet. Insbesondere ist die Unterlegeinheit dazu vorgesehen, in dem Betriebszustand eine Übertragung von Wärme von dem Gargeschirr auf die Kochfeldplatte wenigstens im Wesentlichen zu verhindern. Insbesondere ist die Unterlegeinheit dazu vorgesehen, in dem Betriebszustand zumindest eine Wärmeisolation und/oder eine Wärmesenke bereitzustellen. Die Unterlegeinheit weist insbesondere ein wärmeisolierendes Material und/oder ein Material mit einer relativ hohen spezifischen Wärmekapazität auf und besteht vorzugsweise wenigstens zu einem Großteil aus dem Material. Beispielsweise könnte die Unterlegeinheit wenigstens zu einem Großteil aus Gummi und/oder aus Silikon bestehen. Vorteilhaft besteht die Unterlegeinheit wenigstens zu einem Großteil aus einem Material mit einer spezifischen Wärmekapazität von mindestens 800 J/(kg*K), insbesondere von mindestens 1000 J/(kg*K), vorteilhaft von mindestens 1200 J/(kg*K), besonders vorteilhaft von mindestens 1400 J/(kg*K), vorzugsweise von mindestens 1500 J/(kg*K) und besonders bevorzugt von mindestens 1600 J/(kg*K). Alternativ oder zusätzlich besteht die Unterlegeinheit wenigstens zu einem Großteil aus einem Material mit einer Wärmeleitfähigkeit von maximal 1 W/(m*K), insbesondere von maximal 0,8 W/(m*K), vorteilhaft von maximal 0,5 W/(m*K), besonders vorteilhaft von maximal 0,3 W/(m*K), vorzugsweise von maximal 0,2 W/(m*K) und besonders bevorzugt von maximal 0,16 W/(m*K). Die Unterlegeinheit besteht insbesondere wenigstens zu einem Großteil aus einem im Wesentlichen flexiblen und/oder elastischen Material. Das Material könnte beispielsweise Gummi und/oder Silikon sein. Dadurch kann insbesondere eine Beschädigung der Kochfeldplatte in dem Betriebszustand verhindert werden, wodurch insbesondere eine langlebige Ausgestaltung ermöglicht werden kann.

Zudem wird vorgeschlagen, dass die Anzeigeeinheit wenigstens teilweise in der Aufstelleinheit, insbesondere in dem Gargeschirr und/oder in der Unterlegeinheit der Aufstelleinheit, integriert ist. Unter der Wendung, dass die Anzeigeeinheit wenigstens "teilweise" in einer weiteren Baueinheit integriert ist, soll insbesondere verstanden werden, dass die Anzeigeeinheit zumindest ein Leuchtelement aufweist, welches in der weiteren Baueinheit integriert ist und dass die Anzeigeeinheit zumindest ein weiteres Leuchtelement aufweisen könnte, welches außerhalb und/oder getrennt von der weiteren Baueinheit angeordnet sein könnte. Zumindest ein Teil der Anzeigeeinheit, welcher insbesondere in der weiteren Baueinheit integriert sein könnte, könnte insbesondere bezüglich eines Mittelpunkts und/oder Schwerpunkts des Teils der Anzeigeeinheit über einen Winkelbereich von mindestens 180°, insbesondere von mindestens 270°, vorteilhaft von mindestens 300° und vorzugsweise von mindestens 330° von der weiteren Baueinheit umgeben sein. Die weitere Baueinheit könnte in dem Bereich, in welchem zumindest ein Teil der Anzeigeeinheit integriert sein könnte, wenigstens zu einem Großteil aus zumindest einem transparenten Material bestehen. Zumindest ein Teil der Anzeigeeinheit, welcher insbesondere in der weiteren Baueinheit integriert sein könnte, könnte alternativ oder zusätzlich an einer Oberfläche der weiteren Baueinheit angeordnet und/oder befestigt sein. Dadurch kann die Anzeigeeinheit insbesondere gut sichtbar für einen Bediener positioniert werden, wodurch insbesondere ein hoher Bedienkomfort ermöglicht werden kann.

Die Anzeigeeinheit könnte in dem Betriebszustand wenigstens teilweise unterhalb des Nahbereichs des Gargeschirraufstellbereichs angeordnet sein. Beispielsweise könnte die Anzeigeeinheit ausschließlich in dem Gargeschirr oder in der Unterlegeinheit integriert sein. Alternativ könnte die Anzeigeeinheit insbesondere wenigstens teilweise in dem Gargeschirr und der Unterlegeinheit integriert sein. Vorteilhaft ist die Anzeigeeinheit in dem Betriebszustand wenigstens teilweise unterhalb des Nahbereichs des Gargeschirraufstellbereichs angeordnet. Insbesondere könnte die Anzeigeeinheit in dem Betriebszustand wenigstens teilweise in der Kochfeldplatte integriert und vorteilhaft über einen Winkelbereich von mindestens 180°, insbesondere von mindestens 270°, vorteilhaft von mindestens 300° und vorzugsweise von mindestens 330° von der Kochfeldplatte umgeben sein, und zwar insbesondere bezüglich einer insbesondere beliebig gewählten Ebene. Alternativ oder zusätzlich könnte die Anzeigeeinheit in dem Betriebszustand wenigstens teilweise unterhalb der Kochfeldplatte angeordnet sein. Unter der Wendung, dass die Anzeigeeinheit wenigstens "teilweise" unterhalb eines weiteren Objekts angeordnet ist, soll insbesondere verstanden werden, dass die Anzeigeeinheit zumindest ein Leuchtelement aufweist, welches in dem Betriebszustand unterhalb des weiteren Objekts angeordnet ist, und dass die Anzeigeeinheit zumindest ein weiteres Leuchtelement aufweisen könnte, welches in dem Betriebszustand oberhalb des weiteren Objekts angeordnet sein könnte. Insbesondere könnte das Kochsystem zumindest eine Topferkennungseinheit aufweisen, welche in wenigstens einem Betriebszustand insbesondere mit der Steuereinheit kommunizieren könnte und in Abhängigkeit welcher die Steuereinheit insbesondere die Anzeigeeinheit betreiben könnte. Dadurch kann die Anzeigeeinheit insbesondere besonders geschützt, insbesondere vor in einem Garprozess entstehenden Verunreinigungen geschützt, angeordnet werden, wodurch insbesondere eine langlebige Ausgestaltung erzielt werden kann.

Beispielsweise könnte die Versorgungseinheit, welche in dem Betriebszustand insbesondere jedes Leuchtelement der Anzeigeeinheit einzeln mit Energie versorgt, zumindest eine Batterie und/oder zumindest einen Akkumulator aufweisen. Das Kochsystem weist zumindest ein Induktionsheizelement auf, welches in dem Betriebszustand unterhalb der Kochfeldpatte angeordnet ist und die Anzeigeeinheit mit insbesondere elektrischer Energie versorgt. Insbesondere versorgt das Induktionsheizelement die Anzeigeeinheit durch induktive Energieübertragung mit elektrischer Energie, und zwar in einem Fall einer wenigstens teilweisen Integration der Anzeigeeinheit in der Aufstelleinheit durch die Kochfeldplatte hindurch. Das Induktionsheizelement ist insbesondere wenigstens teilweise einstückig mit der Versorgungseinheit ausgebildet. Insbesondere bildet das Induktionsheizelement zumindest einen Teil der Versorgungseinheit aus, wobei das Kochsystem zumindest ein weiteres Induktionsheizelement aufweisen könnte, welches insbesondere einen weiteren Teil der Versorgungseinheit ausbilden könnte. Insbesondere kann in einem Betriebszustand eine Positionierung der Aufstelleinheit oberhalb des Induktionsheizelements mittels der Anzeigeeinheit ausgegeben werden, und zwar insbesondere durch verfügbare Energie von dem Induktionsheizelement. Insbesondere könnte das Kochsystem zumindest zwei Induktionsheizelemente aufweisen, welche beispielsweise eine gemeinsame Heizzone bilden und/oder in Form einer Matrix angeordnet sein könnten und welche insbesondere gemeinsam die Anzeigeeinheit mit Energie versorgen könnten. Dadurch kann insbesondere auf Batterien und/oder Akkumulatoren verzichtet werden, wodurch insbesondere eine umweltschonende Ausgestaltung erzielt werden kann.

Zudem wird vorgeschlagen, dass die Anzeigeeinheit mehrere Leuchtelemente aufweist und das Induktionsheizelement in dem Betriebszustand jedes Leuchtelement einzeln mit Energie versorgt. Insbesondere ist jedes Leuchtelement der Anzeigeeinheit separat aktivierbar. Es existiert insbesondere für jedes Leuchtelement zumindest ein Stromkreis, welcher elektrisch von weiteren Stromkreisen für weitere Leuchtelemente getrennt ist. Dadurch kann insbesondere eine hohe Flexibilität und/oder eine hohe Vielfalt an Gestaltungsmöglichkeiten geschaffen werden. Insbesondere kann eine Vielzahl verschiedener Anzeigemuster bereitgestellt werden, wodurch einem Bediener eine Vielzahl an Informationen übermittelt werden kann.

Weiterhin wird vorgeschlagen, dass das Induktionsheizelement bei einer senkrechten Betrachtung auf eine Haupterstreckungsebene der Kochfeldplatte in dem Betriebszustand bei einem Aufstellen der Aufstelleinheit ausschließlich in dem Nahbereich des Gargeschirraufstellbereichs angeordnete Leuchtelemente der Anzeigeeinheit aktiviert. Insbesondere aktiviert das Induktionsheizelement in dem Betriebszustand bei einer senkrechten Betrachtung auf eine Haupterstreckungsebene der Kochfeldplatte ausschließlich Leuchtelemente der Anzeigeeinheit, welche bei einem Aufstellen der Aufstelleinheit innerhalb einer von dem Induktionsheizelement aufgespannten Fläche angeordnet sind. Dadurch kann insbesondere ein Anzeigen einer optimalen Aufstellposition ermöglicht werden, wodurch insbesondere Verluste aufgrund eines ungenauen Aufstellens der Aufstelleinheit vermieden werden können.

Ferner wird vorgeschlagen, dass der Bedienungsaufforderungsparameter eine Bedienaufforderung bezüglich eines Aufstellens in dem Gargeschirraufstellbereich ist. Insbesondere ist der Bedienungsaufforderungsparameter zumindest eine Information über eine Aufstellposition in dem Gargeschirraufstellbereich. Die Steuereinheit zeigt in dem Betriebszustand insbesondere einem Bediener mittels der Anzeigeeinheit ein Aufstellen der Aufstelleinheit in dem Gargeschirraufstellbereich an und fordert den Bediener damit insbesondere zu einem Start eines Garprozesses auf. Insbesondere zeigt die Steuereinheit in dem Betriebszustand insbesondere einem Bediener mittels der Anzeigeeinheit, insbesondere im Fall eines ausschließlich teilweisen Aufstellens der Aufstelleinheit in dem Gargeschirraufstellbereich, zumindest einen Überlappungsgrad der Aufstelleinheit mit dem Gargeschirraufstellbereich und/oder zumindest eine Richtung an, in welcher die Aufstelleinheit relativ zu dem Gargeschirraufstellbereich verschoben werden sollte, um insbesondere ein vollständiges Aufstellen der Aufstelleinheit in dem Gargeschirraufstellbereich zu erreichen. In einem Betriebszustand könnte die Steuereinheit bei einer senkrechten Betrachtung auf eine Haupterstreckungsebene der Kochfeldplatte insbesondere einen Überlappungsgrad der Aufstelleinheit mit dem Induktionsheizelement durch verschieden farbige Leuchtelemente der Anzeigeeinheit und/oder durch Blinken der Anzeigeeinheit und/oder durch Deaktivierung der Anzeigeeinheit ausgeben. Beispielsweise könnte die Steuereinheit in einem Betriebszustand bei einer senkrechten Betrachtung auf eine Haupterstreckungsebene der Kochfeldplatte insbesondere eine vollständige Überlappung der Aufstelleinheit mit dem Induktionsheizelement durch eine grüne Farbe der Leuchtelemente der Anzeigeeinheit ausgeben. Die Steuereinheit könnte beispielsweise in einem Betriebszustand bei einer senkrechten Betrachtung auf eine Haupterstreckungsebene der Kochfeldplatte insbesondere eine teilweise Überlappung der Aufstelleinheit mit dem Induktionsheizelement durch ein Blinken der Leuchtelemente der Anzeigeeinheit ausgeben. Beispielsweise könnte die Steuereinheit in einem Betriebszustand bei einer senkrechten Betrachtung auf eine Haupterstreckungsebene der Kochfeldplatte insbesondere eine Anordnung der Aufstelleinheit außerhalb und/oder wenigstens zu einem Großteil außerhalb des Induktionsheizelements durch eine Deaktivierung der Anzeigeeinheit ausgeben. Dadurch kann insbesondere ein schneller Garprozess ermöglicht und/oder Verluste aufgrund eines ungenauen Aufstellens der Aufstelleinheit in dem Gargeschirraufstellbereich vermieden werden. Insbesondere kann ein Aufstellen eines Gargeschirrs in einer optimalen Position in dem Gargeschirraufstellbereich in einfacher und/oder intuitiver Weise ermöglicht werden, und zwar insbesondere bei einer Kochfeldplatte, welche frei von Markierungen ist. Insbesondere kann ein Bediener durch ein mittels der Anzeigeeinheit vermitteltes Feedback die Aufstelleinheit optimal in dem Gargeschirraufstellbereich positionieren, wodurch insbesondere eine optimierte Beheizung erfolgen kann.

Zudem wird vorgeschlagen, dass der Bedienungsaufforderungsparameter eine Bedienaufforderung bezüglich eines Garprozesses, insbesondere bezüglich eines Garstatus und/oder eines Timers, ist. Insbesondere ist der Bedienungsaufforderungsparameter zumindest eine Information über einen Garablauf. Die Steuereinheit zeigt in dem Betriebszustand insbesondere einem Bediener mittels der Anzeigeeinheit zumindest eine Information bezüglich eines Garablaufs an und fordert den Bediener damit insbesondere zu einer Handlung auf. Beispielsweise könnte die Steuereinheit den Bediener mittels der Anzeigeeinheit, insbesondere im Fall eines abgelaufenen Timers, dazu auffordern, das Gargeschirr aus dem Gargeschirraufstellbereich zu entfernen, um beispielsweise ein in dem Gargeschirr gegartes Gargut zu essen. Alternativ oder zusätzlich könnte die Steuereinheit den Bediener mittels der Anzeigeeinheit dazu auffordern, zumindest einen weiteren Schritt in dem Garprozess einzuleiten und/oder vorzubereiten, wie beispielsweise ein Hinzufügen zumindest einer Zutat und/oder eine Reduzierung einer Heizleistung. Der Garstatus könnte beispielsweise ein Kochen und/oder ein Simmern und/oder ein Überkochen sein. Dadurch kann insbesondere ein besonders hoher Bedienkomfort erreicht werden.

Weiterhin wird vorgeschlagen, dass der Bedienungsaufforderungsparameter eine Bedienaufforderung bezüglich eines Zubereitungsrezepts, insbesondere bezüglich eines Hinzufügens zumindest einer Zutat, ist. Insbesondere ist der Bedienungsaufforderungsparameter zumindest eine Information über ein Zubereitungsrezept. Die Steuereinheit zeigt in dem Betriebszustand insbesondere einem Bediener mittels der Anzeigeeinheit zumindest eine Information bezüglich eines Zubereitungsrezepts an und fordert den Bediener damit insbesondere zu einer Handlung auf, wie insbesondere zu einem Hinzufügen zumindest einer Zutat. Dadurch kann insbesondere eine komfortable und/oder einfache Zubereitung von Gargut ermöglicht werden. Insbesondere kann eine geringe Wahrscheinlichkeit eines zu späten Hinzufügens von Zutaten erzielt werden, wodurch insbesondere ein optimales Garergebnis erreicht werden kann.

Ferner wird vorgeschlagen, dass der Bedienungsaufforderungsparameter eine Bedienaufforderung zu einem Befreien des Gargeschirraufstellbereichs von ungewollten Gegenständen ist. Insbesondere ist der Bedienungsaufforderungsparameter zumindest eine Information über einen sich in dem Gargeschirraufstellbereich befindlichen Gegenstand. Die Steuereinheit zeigt in dem Betriebszustand insbesondere einem Bediener mittels der Anzeigeeinheit an, ob sich ein ungewollter Gegenstand in dem Gargeschirraufstellbereich befindet, und fordert den Bediener damit insbesondere zu einer Handlung auf, den ungewollten Gegenstand aus dem Gargeschirraufstellbereich zu entfernen. Dadurch kann insbesondere ein hoher Sicherheitsstandard gewährleistet werden. Insbesondere können gefährliche Situationen vermieden werden, da ungewollte Gegenstände insbesondere einen Garprozess und/oder eine Beheizung negativ beeinflussen könnten.

Ein besonders hoher Bedienkomfort kann insbesondere erreicht werden durch ein Verfahren zu einem Betrieb eines Kochsystems, mit zumindest einer Kochfeldplatte, welche zumindest einen Gargeschirraufstellbereich definiert, und mit zumindest einer Anzeigeeinheit, welche bei einer senkrechten Betrachtung auf eine Haupterstreckungsebene der Kochfeldplatte wenigstens teilweise in einem Nahbereich des Gargeschirraufstellbereichs angeordnet ist, wobei in wenigstens einem Betriebszustand mittels der Anzeigeeinheit zumindest ein Bedienungsaufforderungsparameter ausgegeben wird.

Das Kochsystem soll hierbei nicht auf die oben beschriebene Anwendung und Ausführungsform beschränkt sein. Insbesondere kann das Kochsystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochsystem mit einer Kochfeldplatte, mit einer Bedienerschnittstelle, mit einer Steuereinheit, mit einer Anzeigeeinheit und mit einer Aufstelleinheit außerhalb eines Betriebszustands in einer schematischen Draufsicht,
- Fig. 2: einen vergrößerten Ausschnitt des Kochsystems in einem Betriebszustand in einer schematischen Draufsicht, wobei aktivierte Leuchtelemente der Anzeigeeinheit schraffiert dargestellt sind,
- Fig. 3: den vergrößerten Ausschnitt des Kochsystems in dem Betriebszustand in einer schematischen Schnittdarstellung, wobei aktivierte Leuchtelemente der Anzeigeeinheit schraffiert dargestellt sind,
- Fig. 4: einen vergrößerten Ausschnitt des Kochsystems in einem weiteren Betriebszustand in einer schematischen Draufsicht, wobei aktivierte Leuchtelemente der Anzeigeeinheit schraffiert dargestellt sind,
- Fig. 5: den vergrößerten Ausschnitt des Kochsystems in dem weiteren Betriebszustand in einer schematischen Schnittdarstellung, wobei aktivierte Leuchtelemente der Anzeigeeinheit schraffiert dargestellt sind,
- Fig. 6: ein alternatives Kochsystem mit einer Kochfeldplatte, mit einer Anzeigeeinheit und mit einer Aufstelleinheit in einem Betriebszustand in einer schematischen Draufsicht,
- Fig. 7: das Kochsystem aus Fig. 6 mit der Kochfeldplatte, mit der Anzeigeeinheit und mit der Aufstelleinheit in einem Betriebszustand in einer schematischen Draufsicht,
- Fig. 8: das Kochsystem aus Fig. 6 mit der Kochfeldplatte, mit der Anzeigeeinheit und mit der Aufstelleinheit in einem Betriebszustand in einer schematischen Draufsicht,
- Fig. 9: das Kochsystem aus Fig. 6 mit der Kochfeldplatte, mit der Anzeigeeinheit und mit der Aufstelleinheit in einem Betriebszustand bei einer ersten verbleibenden Zeitspanne in einer schematischen Draufsicht,
- Fig. 10: das Kochsystem aus Fig. 6 mit der Kochfeldplatte, mit der Anzeigeeinheit und mit der Aufstelleinheit in dem Betriebszustand bei einer zweiten verbleibenden Zeitspanne in einer schematischen Draufsicht,
- Fig. 11: das Kochsystem aus Fig. 6 mit der Kochfeldplatte, mit der Anzeigeeinheit und mit der Aufstelleinheit in dem Betriebszustand bei einer dritten verbleibenden Zeitspanne in einer schematischen Draufsicht,
- Fig. 12: das Kochsystem aus Fig. 6 mit der Kochfeldplatte, mit der Anzeigeeinheit und mit der Aufstelleinheit in einem Betriebszustand in einem ersten Zubereitungsschritt eines Zubereitungsrezepts in einer schematischen Draufsicht,
- Fig. 13: das Kochsystem aus Fig. 6 mit der Kochfeldplatte, mit der Anzeigeeinheit und mit der Aufstelleinheit in einem Betriebszustand in einem zweiten Zubereitungsschritt des Zubereitungsrezepts in einer schematischen Draufsicht,
- Fig. 14: das Kochsystem aus Fig. 6 mit der Kochfeldplatte, mit der Anzeigeeinheit und mit der Aufstelleinheit in einem Betriebszustand in einem dritten Zubereitungsschritt des Zubereitungsrezepts in einer schematischen Draufsicht,
- Fig. 15: das Kochsystem aus Fig. 6 mit der Kochfeldplatte, mit der Anzeigeeinheit und mit der Aufstelleinheit in einem Betriebszustand in einem vierten Zubereitungsschritt des Zubereitungsrezepts in einer schematischen Draufsicht,
- Fig. 16: ein alternatives Kochsystem mit einer Kochfeldplatte, mit einer Anzeigeeinheit, mit einem Induktionsheizelement und mit einer Aufstelleinheit in einem Betriebszustand in einer schematischen Draufsicht,
- Fig. 17: das Kochsystem aus Fig. 16 mit der Kochfeldplatte, mit der Anzeigeeinheit, mit dem Induktionsheizelement und mit der Aufstelleinheit in einem Betriebszustand in einer schematischen Draufsicht,
- Fig. 18: das Kochsystem aus Fig. 16 mit der Kochfeldplatte, mit der Anzeigeeinheit, mit dem Induktionsheizelement und mit der Aufstelleinheit in einem Betriebszustand in einer schematischen Draufsicht,
- Fig. 19: das Kochsystem aus Fig. 16 mit der Kochfeldplatte, mit der Anzeigeeinheit, mit dem Induktionsheizelement und mit der Aufstelleinheit in einem Betriebszustand in einer schematischen Draufsicht,
- Fig. 20: ein alternatives Kochsystem in einem Betriebszustand in einer schematischen Draufsicht,
- Fig. 21: das Kochsystem aus Fig. 20 in dem Betriebszustand in einer schematischen teilweisen Schnittdarstellung,
- Fig. 22: das Kochsystem aus Fig. 20 in einem Betriebszustand in einer schematischen Draufsicht,
- Fig. 23: das Kochsystem aus Fig. 20 in dem Betriebszustand in einer schematischen teilweisen Schnittdarstellung,
- Fig. 24: ein alternatives Kochsystem in einem Betriebszustand in einer schematischen Draufsicht,
- Fig. 25: das Kochsystem aus Fig. 24 in dem Betriebszustand in einer schematischen teilweisen Schnittdarstellung,
- Fig. 26: ein alternatives Kochsystem in einem Betriebszustand in einer schematischen Draufsicht,
- Fig. 27: das Kochsystem aus Fig. 26 in dem Betriebszustand in einer schematischen teilweisen Schnittdarstellung,
- Fig. 28: das Kochsystem aus Fig. 26 in einem Betriebszustand in einer schematischen Draufsicht und
- Fig. 29: das Kochsystem aus Fig. 26 in dem Betriebszustand in einer schematischen teilweisen Schnittdarstellung.

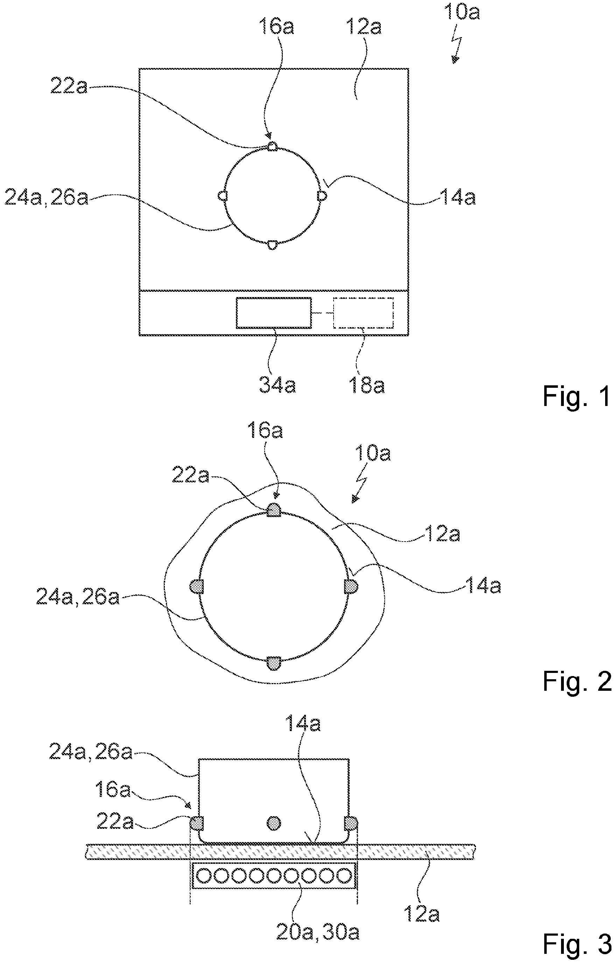

Fig. 1 zeigt ein Kochsystem 10a. Das Kochsystem 10a weist eine Kochfeldplatte 12a auf. In einem montierten Zustand bildet die Kochfeldplatte 12a einen Teil eines Kochfeldaußengehäuses, insbesondere des Kochsystems 10a, aus. Die Kochfeldplatte 12a bildet in einer Einbaulage einen einem Bediener zugewandten Teil des Kochfeldaußengehäuses aus. In einem montierten Zustand ist die Kochfeldplatte 12a zu einem Aufstellen von Gargeschirr 26a vorgesehen.

Die Kochfeldplatte 12a definiert einen Gargeschirraufstellbereich 14a. Der Gargeschirraufstellbereich 14a ist zu einem Aufstellen von Gargeschirr 26a vorgesehen. Der Gargeschirraufstellbereich 14a ist von einer Oberfläche der Kochfeldplatte 12a definiert.

Das Kochsystem 10a weist eine Bedienerschnittstelle 34a zu einer Eingabe und/oder Auswahl von Betriebsparametern, beispielsweise einer Heizleistung und/oder einer Heizleistungsdichte und/oder einer Heizzone auf. Die Bedienerschnittstelle 34a ist zu einer Ausgabe eines Werts eines Betriebsparameters an einen Bediener vorgesehen. Beispielsweise könnte die Bedienerschnittstelle 34a den Wert des Betriebsparameters an einen Bediener optisch und/oder akustisch ausgeben.

Das Kochsystem 10a weist eine Steuereinheit 18a auf. Die Steuereinheit 18a ist dazu vorgesehen, in Abhängigkeit von mittels der Bedienerschnittstelle 34a eingegebenen Betriebsparametern Aktionen auszuführen und/oder Einstellungen zu verändern. In einer Einbaulage ist die Steuereinheit 18a unterhalb der Kochfeldplatte 12a angeordnet.

Das Kochsystem 10a weist eine Vielzahl von Induktionsheizelementen 30a auf (vgl. Fig. 2 bis 5). Von den Induktionsheizelementen 30a ist im vorliegenden Ausführungsbeispiel lediglich eines dargestellt. Beispielsweise könnten die Induktionsheizelemente 30a in einer Reihe angeordnet sein. Alternativ oder zusätzlich könnten die Induktionsheizelemente 30a in Form einer Matrix angeordnet sein. Die Induktionsheizelemente 30a könnten alternativ in Form eines klassischen Kochfelds angeordnet sein, bei welchem jedes der Induktionsheizelemente 30a beispielsweise eine eigenständige Heizzone definieren und/oder ausbilden könnte. Im Folgenden wird lediglich eines der Induktionsheizelemente 30a beschrieben.

Das Induktionsheizelement 30a ist dazu vorgesehen, auf der Kochfeldplatte 12a oberhalb des Induktionsheizelements 30a aufgestelltes Gargeschirr zu erhitzen. In einem Betriebszustand stellt das Induktionsheizelement 30a, welches insbesondere aktiviert ist, einen magnetischen Fluss bereit, welcher insbesondere zu einer Erhitzung von aufgestelltem Gargeschirr 26a vorgesehen ist. Das Induktionsheizelement 30a, welches insbesondere aktiviert ist, führt in einem Betriebszustand aufgestelltem Gargeschirr 26a, insbesondere mittels des von dem Induktionsheizelement 30a bereitgestellten magnetischen Flusses, Energie zu. Die Steuereinheit 18a regelt in einem Betriebszustand eine Energiezufuhr zu dem insbesondere aktivierten Induktionsheizelement 30a. In einer Einbaulage ist das Induktionsheizelement 30a unterhalb der Kochfeldplatte 12a, und zwar insbesondere unterhalb des Gargeschirraufstellbereichs 14a der Kochfeldplatte 12a, angeordnet.

Das Kochsystem 10a weist eine Anzeigeeinheit 16a auf (vgl. Fig. 1 bis 5). Bei einer senkrechten Betrachtung auf eine Haupterstreckungsebene der Kochfeldplatte 12a ist die Anzeigeeinheit 16a teilweise in einem Nahbereich des Gargeschirraufstellbereichs 14a angeordnet. Im vorliegenden Ausführungsbeispiel weist die Anzeigeeinheit 16a vier Leuchtelemente 22a auf. Die Leuchtelemente 22a sind im vorliegenden Ausführungsbeispiel als LEDs ausgebildet. Von mehrfach vorhandenen Objekten ist in den Figuren jeweils lediglich eines mit einem Bezugszeichen versehen.

Das Kochsystem 10a weist eine Versorgungseinheit 20a auf (vgl. Fig. 2 bis 5). In einem Betriebszustand versorgt die Versorgungseinheit 20a die Anzeigeeinheit 16a mit Energie. Die Versorgungseinheit 20a versorgt in einem Betriebszustand jedes Leuchtelement 22a der Anzeigeeinheit 16a einzeln mit Energie.

Im vorliegenden Ausführungsbeispiel ist die Versorgungseinheit 20a einstückig mit dem Induktionsheizelement 30a ausgebildet. In einem Betriebszustand versorgt das Induktionsheizelement 30a die Anzeigeeinheit 16a mit Energie. Das Induktionsheizelement 30a versorgt in einem Betriebszustand jedes Leuchtelement 22a der Anzeigeeinheit 16a einzeln mit Energie.

Das Kochsystem 10a weist eine Aufstelleinheit 24a auf (vgl. Fig. 1 bis 5). In einem Betriebszustand ist die Aufstelleinheit 24a in dem Gargeschirraufstellbereich 14a angeordnet. Im vorliegenden Ausführungsbeispiel weist die Aufstelleinheit 24a das Gargeschirr 26a auf. Die Aufstelleinheit 24a ist als das Gargeschirr 26a ausgebildet.

Die Anzeigeeinheit 16a ist in der Aufstelleinheit 24a integriert. Bei einer senkrechten Betrachtung auf eine Haupterstreckungsebene der Kochfeldplatte 12a sind die Leuchtelemente 22a der Anzeigeeinheit 16a im Wesentlichen gleichmäßig über einen Umfang der Aufstelleinheit 24a verteilt angeordnet.

In einem Betriebszustand betreibt die Steuereinheit 18a die Anzeigeeinheit 16a in Abhängigkeit von einem Bedienungsaufforderungsparameter. Die Steuereinheit 18a fordert in einem Betriebszustand einen Bediener durch den mittels der Anzeigeeinheit 16a ausgegebenen Bedienungsaufforderungsparameter zu einer Handlung auf.

In einem Betriebszustand aktiviert das Induktionsheizelement 30a, insbesondere in Abhängigkeit einer Ansteuerung durch die Steuereinheit 18a, bei einer senkrechten Betrachtung auf eine Haupterstreckungsebene der Kochfeldplatte 12a bei einem Aufstellen der Aufstelleinheit 24a ausschließlich in dem Nahbereich des Gargeschirraufstellbereichs 14a angeordnete Leuchtelemente 22a der Anzeigeeinheit 16a. Der Bedienungsaufforderungsparameter ist eine Bedienaufforderung bezüglich eines Aufstellens in dem Gargeschirraufstellbereich 14a.

In einem Betriebszustand stellt ein Bediener die Aufstelleinheit 24a in dem Gargeschirraufstellbereich 14a auf (vgl. Fig. 2 und 3). Die in der Aufstelleinheit 24a integrierte Anzeigeeinheit 16a ist in einem Betriebszustand oberhalb des Induktionsheizelements 30a angeordnet. Bei einer senkrechten Betrachtung auf eine Haupterstreckungsebene der Kochfeldplatte 12a beinhaltet der Gargeschirraufstellbereich 14a die Aufstelleinheit 24a. In dem Betriebszustand aktiviert das Induktionsheizelement 30a jedes Leuchtelement 22a der Anzeigeeinheit 16a.

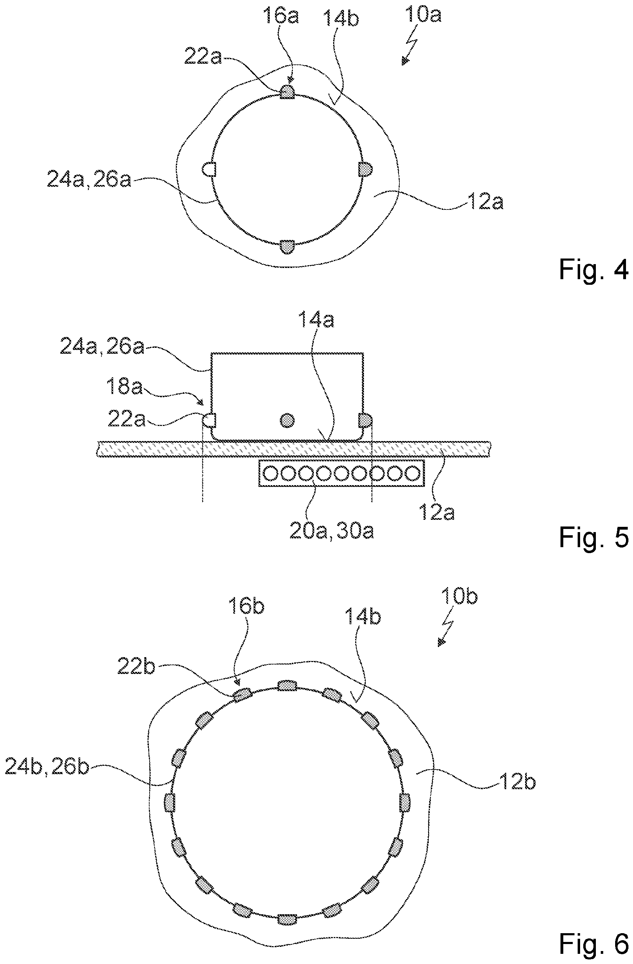

In einem Betriebszustand stellt ein Bediener die Aufstelleinheit 24a teilweise außerhalb des Gargeschirraufstellbereichs 14a auf (vgl. Fig. 4 und 5). Die in der Aufstelleinheit 24a integrierte Anzeigeeinheit 16a ist in einem Betriebszustand teilweise oberhalb des Induktionsheizelements 30a angeordnet. In dem Betriebszustand ist die in der Aufstelleinheit 24a integrierte Anzeigeeinheit 16a bei einer senkrechten Betrachtung auf eine Haupterstreckungsebene der Kochfeldplatte 12a teilweise neben dem Induktionsheizelement 30a angeordnet. In dem Betriebszustand aktiviert das Induktionsheizelement 30a, insbesondere in Abhängigkeit einer Ansteuerung durch die Steuereinheit 18a, bei einer senkrechten Betrachtung auf eine Haupterstreckungsebene der Kochfeldplatte 12a bei einem Aufstellen der Aufstelleinheit 24a ausschließlich in dem Nahbereich des Gargeschirraufstellbereichs 14a angeordnete Leuchtelemente 22a der Anzeigeeinheit 16a. Leuchtelemente 22a der Anzeigeeinheit 16a, welche bei einer senkrechten Betrachtung auf eine Haupterstreckungsebene der Kochfeldplatte 12a außerhalb des Gargeschirraufstellbereichs 14a angeordnet sind, sind in dem Betriebszustand deaktiviert. Die Steuereinheit 18a fordert einen Bediener in dem Betriebszustand mittels der Anzeigeeinheit 16a dazu auf, die Aufstelleinheit 24a zu verschieben, und zwar in der Art, dass die Aufstelleinheit 24a bei einer senkrechten Betrachtung auf eine Haupterstreckungsebene der Kochfeldplatte 12a in dem Gargeschirraufstellbereich 14a angeordnet ist.

In einem Verfahren zu einem Betrieb des Kochsystems 10a wird die Anzeigeeinheit 16a bei einer senkrechten Betrachtung auf eine Haupterstreckungsebene der Kochfeldplatte 12a teilweise in dem Nahbereich des Gargeschirraufstellbereichs 14a angeordnet. In dem Betriebszustand wird mittels der Anzeigeeinheit 16a ein Bedienungsaufforderungsparameter ausgegeben.

In Fig. 6 bis 29 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 5 verwiesen werden kann. Zur Unterscheidung der Ausführungsbeispiele ist der Buchstabe a in den Bezugszeichen des Ausführungsbeispiels in den Fig. 1 bis 5 durch die Buchstaben b bis f in den Bezugszeichen der Ausführungsbeispiele der Fig. 6 bis 29 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 5 verwiesen werden.

Fig. 6 zeigt ein Kochsystem 10b mit einer Kochfeldplatte 12b, welche einen Gargeschirraufstellbereich 14b definiert. Eine Anzeigeeinheit 16b des Kochsystems 10b weist mehrere Leuchtelemente 22b auf. Im vorliegenden Ausführungsbeispiel weist die Anzeigeeinheit 16b sechzehn Leuchtelemente 22b auf. Eine Steuereinheit 18b des Kochsystems 10b betreibt in Abhängigkeit von einem Bedienungsaufforderungsparameter die Anzeigeeinheit 16b.

Der Bedienungsaufforderungsparameter ist eine Bedienaufforderung bezüglich eines Aufstellens in dem Gargeschirraufstellbereich 14b. In einem Betriebszustand aktiviert ein Induktionsheizelement 30b des Kochsystems 10b, insbesondere in Abhängigkeit einer Ansteuerung durch die Steuereinheit 18b, bei einer senkrechten Betrachtung auf eine Haupterstreckungsebene der Kochfeldplatte 12b bei einem Aufstellen einer Aufstelleinheit 24b ausschließlich in dem Nahbereich des Gargeschirraufstellbereichs 14b angeordnete Leuchtelemente 22b der Anzeigeeinheit 16b.

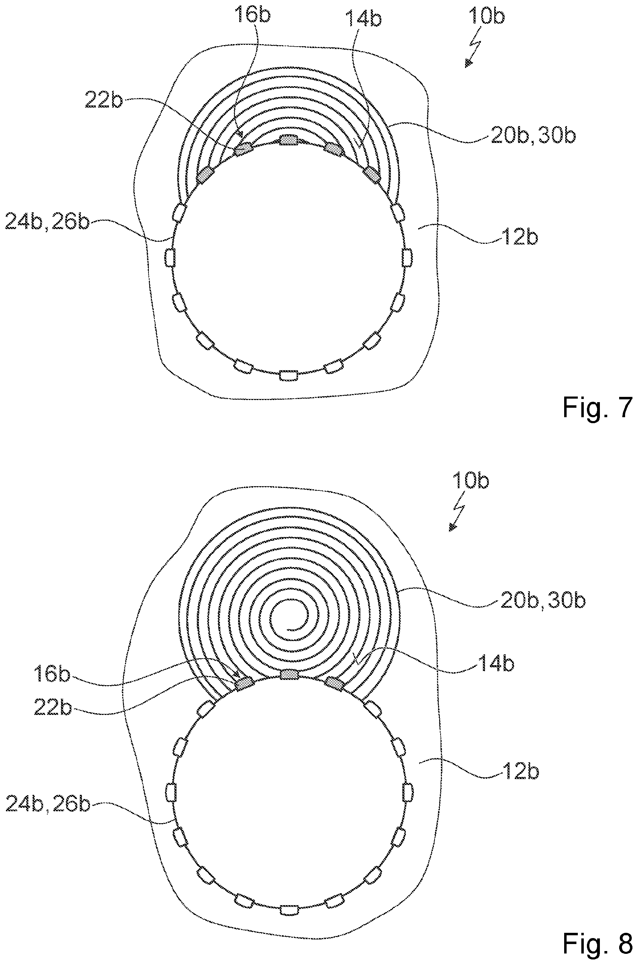

In einem Betriebszustand, in welchem die Aufstelleinheit 24b vollständig in dem Gargeschirraufstellbereich 14b angeordnet ist, aktiviert das Induktionsheizelement 30b bei einer senkrechten Betrachtung auf eine Haupterstreckungsebene der Kochfeldplatte 12b bei einem Aufstellen einer Aufstelleinheit 24b alle Leuchtelemente 22b der Anzeigeeinheit 16b. Bei einer senkrechten Betrachtung auf eine Haupterstreckungsebene der Kochfeldplatte 12b in Abhängigkeit einer Überlappung der Aufstelleinheit 24b mit dem Gargeschirraufstellbereich 14b aktiviert das Induktionsheizelement 30a einen bestimmten Anteil an Leuchtelementen 22b der Anzeigeeinheit 16b (vgl. Fig. 7 und 8).

In einem Betriebszustand, in welchem die Aufstelleinheit 24b zu im Wesentlichen 35 % in dem Gargeschirraufstellbereich 14b angeordnet ist, aktiviert das Induktionsheizelement 30b bei einer senkrechten Betrachtung auf eine Haupterstreckungsebene der Kochfeldplatte 12b bei einem Aufstellen einer Aufstelleinheit 24b fünf Leuchtelemente 22b der Anzeigeeinheit 16b (vgl. Fig. 7). In einem Betriebszustand, in welchem die Aufstelleinheit 24b zu im Wesentlichen 20 % in dem Gargeschirraufstellbereich 14b angeordnet ist, aktiviert das Induktionsheizelement 30b bei einer senkrechten Betrachtung auf eine Haupterstreckungsebene der Kochfeldplatte 12b bei einem Aufstellen einer Aufstelleinheit 24b drei Leuchtelemente 22b der Anzeigeeinheit 16b (vgl. Fig. 8).

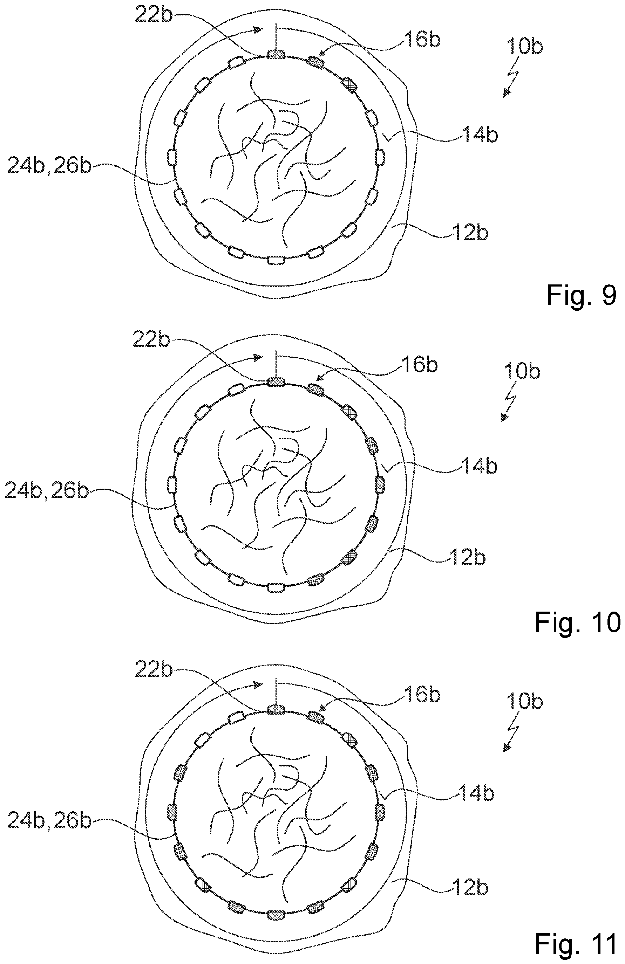

In dem Betriebszustand informiert die Steuereinheit 18b einen Bediener mittels der Anzeigeeinheit 16b über eine verbleibende Zeit bis zum Vornehmen einer Handlung durch den Bediener (vgl. Fig. 9). Die Steuereinheit 18b betreibt in dem Betriebszustand die Anzeigeeinheit 16b in Abhängigkeit von einem Bedienungsaufforderungsparameter. Der Bedienungsaufforderungsparameter ist eine Bedienaufforderung bezüglich eines Garprozesses. In dem Betriebszustand aktiviert die Steuereinheit 18b umso mehr Leuchtelemente 22b der Anzeigeeinheit 16b, je näher ein Ende einer vorgegebenen Zeitspanne rückt. In dem Betriebszustand aktiviert die Steuereinheit 18b die Leuchtelemente 22b der Anzeigeeinheit 16b in im Wesentlichen gleichmäßigen Abständen, welche insbesondere durch eine Dauer der vorgegebenen Zeitspanne und/oder durch eine Anzahl an Leuchtelementen 22b der Anzeigeeinheit 16b definiert sind. Die Steuereinheit 18b fordert in dem Betriebszustand einen Bediener mittels der Anzeigeeinheit 16b bei einer Aktivierung aller Leuchtelemente 22b der Anzeigeeinheit 16b, und damit insbesondere bei einem Ablauf der vorgegebenen Zeitspanne, zu einer Handlung auf.

Bei einer ersten verbleibenden Zeitspanne t₁ bis zu einem Ablauf der vorgegebenen Zeitspanne aktiviert die Steuereinheit 18b beispielsweise drei Leuchtelemente 22b der Anzeigeeinheit 16b (vgl. Fig. 9). Bei einer zweiten verbleibenden Zeitspanne t₂ < t₁ bis zu einem Ablauf der vorgegebenen Zeitspanne aktiviert die Steuereinheit 18b beispielsweise acht Leuchtelemente 22b der Anzeigeeinheit 16b (vgl. Fig. 10). Bei einer dritten verbleibenden Zeitspanne t₃ < t₂ < t₁ bis zu einem Ablauf der vorgegebenen Zeitspanne aktiviert die Steuereinheit 18b beispielsweise vierzehn Leuchtelemente 22b der Anzeigeeinheit 16b (vgl. Fig. 11).

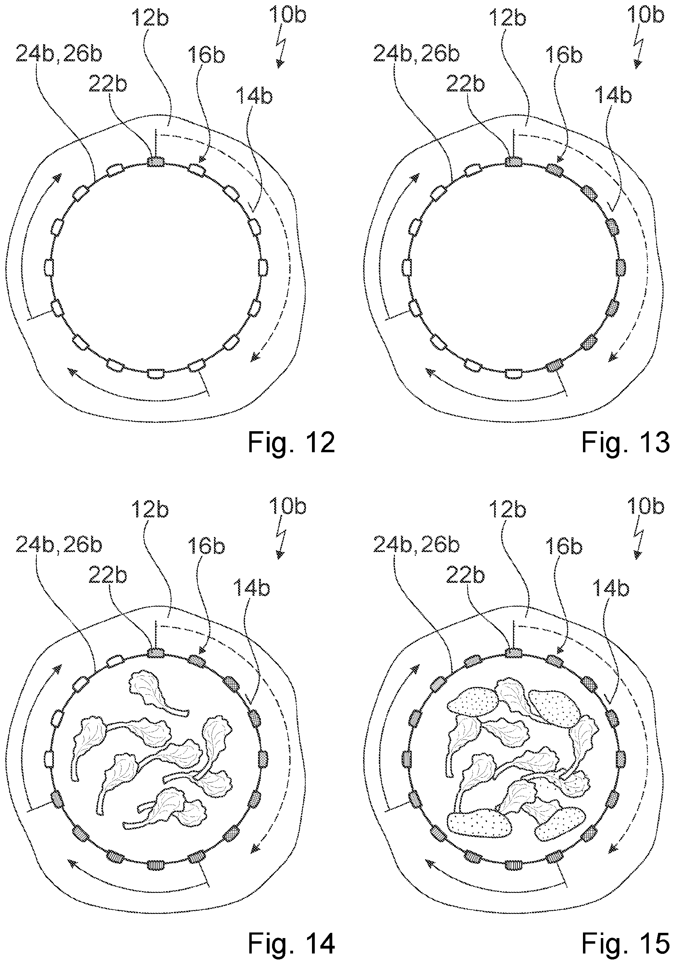

In einem Betriebszustand führt die Steuereinheit 18b einen Bediener mittels der Anzeigeeinheit 16b durch ein Zubereitungsrezept (vgl. Fig. 12 bis 15). Beispielsweise könnte die Steuereinheit 18b das Zubereitungsrezept aus einer Speichereinheit der Steuereinheit 18b und/oder aus einem mobilen Gerät, wie beispielsweise einem Smartphone und/oder einem Handy, und/oder aus einem Netzwerk, wie beispielsweise einem Haushaltsnetz und/oder dem Internet, abrufen. Der Bedienungsaufforderungsparameter ist eine Bedienaufforderung bezüglich eines Zubereitungsrezepts. In dem Betriebszustand gibt die Steuereinheit 18b mittels der Anzeigeeinheit 16b verschiedene Rezeptschritte durch verschiedene Farben an Leuchtelementen 22b der Anzeigeeinheit 16b aus. Die Steuereinheit 18b ordnet jedem Rezeptschritt eine Farbe zu.

Im vorliegenden Ausführungsbeispiel wird ohne Beschränkung der Allgemeinheit ein Zubereitungsrezept mit drei Zutaten beschrieben. Zu einem Start des Zubereitungsrezepts aktiviert die Steuereinheit 18b in dem Betriebszustand ein Leuchtelement 22b der Anzeigeeinheit 16b in blauer Farbe, um einen Bediener insbesondere zu einer Zugabe einer ersten Zutat, wie beispielsweise Wasser, aufzufordern. Nach Zugabe der ersten Zutat und insbesondere einer Bestätigung durch den Bediener, dass die erste Zutat zugefügt wurde, erhitzt die Steuereinheit 18b in dem Betriebszustand die in der als Gargeschirr 26b ausgebildeten Aufstelleinheit 24b befindliche erste Zutat. In dem Betriebszustand aktiviert die Steuereinheit 18b mit zunehmender Temperatur der ersten Zutat eine größere Anzahl an Leuchtelementen 22b der Anzeigeeinheit 16b in blauer Farbe, bis insbesondere im Wesentlichen 33% der Leuchtelemente 22b der Anzeigeeinheit 16 aktiviert sind (vgl. Fig. 13). Die Steuereinheit 18b fordert einen Bediener durch Blinken der der ersten Zutat zugeordneten Leuchtelemente 22b der Anzeigeeinheit 16b zu einer Zugabe einer zweiten Zutat auf, wie beispielsweise Spinat.

Nach Zugabe der zweiten Zutat, und insbesondere einer Bestätigung durch den Bediener, dass die zweite Zutat zugefügt wurde, erhitzt die Steuereinheit 18b in dem Betriebszustand die in der als Gargeschirr 26b ausgebildeten Aufstelleinheit 24b befindliche zweite Zutat. Die Steuereinheit 18b aktiviert die der ersten Zutat zugeordneten Leuchtelemente 22b dauerhaft und stellt insbesondere das Blinken ab, wodurch ein Bediener insbesondere zu jeder Zeit über einen Status des Zubereitungsrezepts informiert ist und insbesondere genau weiß, welche Zutaten bereits zugefügt wurden und/oder in welchem Garstatus sich die Zutat befindet. In dem Betriebszustand aktiviert die Steuereinheit 18b mit zunehmender Temperatur der ersten Zutat eine größere Anzahl an Leuchtelementen 22b der Anzeigeeinheit 16 in derjenigen Farbe, welche der zweiten Zutat zugeordnet ist, bis insbesondere im Wesentlichen 66 % der Leuchtelemente 22b der Anzeigeeinheit 16 aktiviert sind (vgl. Fig. 14). Die Steuereinheit 18b fordert einen Bediener durch Blinken der der zweiten Zutat zugeordneten Leuchtelemente 22b der Anzeigeeinheit 16b zu einer Zugabe einer dritten Zutat auf, wie beispielsweise Kartoffeln. Nach Abschluss eines Garprozesses einer letzten Zutat des Zubereitungsrezepts aktiviert die Steuereinheit 18b alle Leuchtelemente 22b der Anzeigeeinheit 16b, um einen Bediener insbesondere zu einer Handlung, wie beispielsweise einem Entfernen der als Gargeschirr 26b ausgebildeten Aufstelleinheit 24b, zu informieren (vgl. Fig. 15).

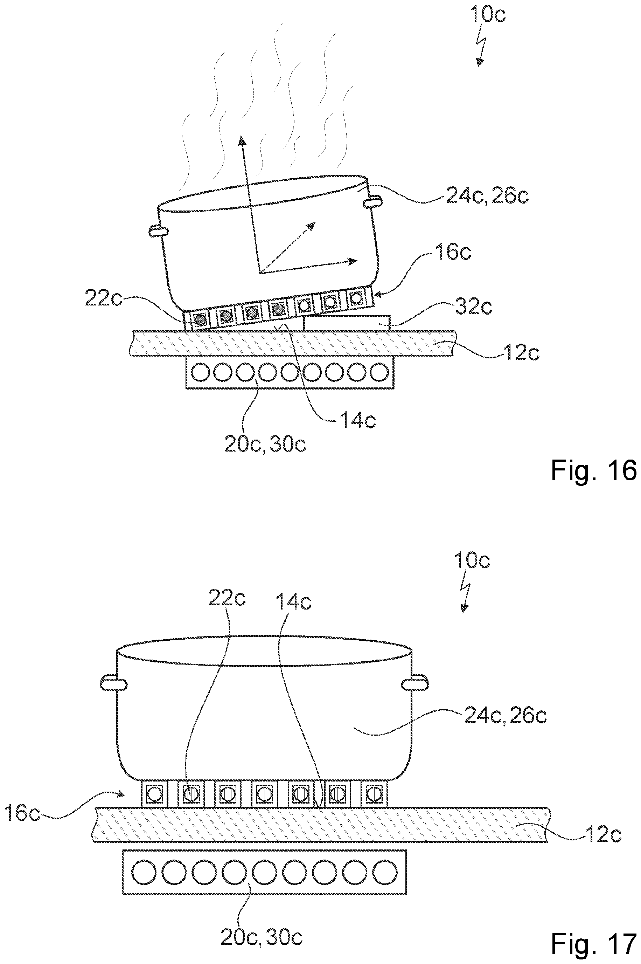

Fig. 16 zeigt ein Kochsystem 10c mit einer Kochfeldplatte 12c, welche einen Gargeschirraufstellbereich 14c definiert. Eine Anzeigeeinheit 16c des Kochsystems 10c weist mehrere Leuchtelemente 22c auf. Eine Steuereinheit 18c des Kochsystems 10c betreibt in Abhängigkeit von einem Bedienungsaufforderungsparameter die Anzeigeeinheit 16c. Der Bedienungsaufforderungsparameter ist eine Bedienaufforderung zu einem Befreien des Gargeschirraufstellbereichs 14c von ungewollten Gegenständen 32c.

In einem Betriebszustand möchte ein Bediener eine als Gargeschirr 26c ausgebildete Aufstelleinheit 24c in dem Gargeschirraufstellbereich 14c aufstellen. In dem Gargeschirraufstellbereich 14c befindet sich ein ungewollter Gegenstand 32c, wie beispielsweise eine Münze. Aufgrund des ungewollten Gegenstands 32c würde eine Beheizung der Aufstelleinheit 24c negativ beeinflusst werden. Die Steuereinheit 18c informiert einen Bediener mittels der Anzeigeeinheit 16c über eine Anwesenheit des ungewollten Gegenstands 32c, und zwar insbesondere durch Aktivierung von Leuchtelementen 22c der Anzeigeeinheit 16c. Die Steuereinheit 18c aktiviert insbesondere durch Ansteuerung eines Induktionsheizelements 30c des Kochsystems 10c in dem Gargeschirraufstellbereich 14c angeordnete Leuchtelemente 22c der Anzeigeeinheit 16c. In einem Bereich, in welchem der ungewollte Gegenstand 32c zwischen dem Induktionsheizelement 30c und der Aufstelleinheit 24c angeordnet ist, ist eine Aktivierung der in der Aufstelleinheit 24c integrierten Anzeigeeinheit 16c gestört, weshalb in einer Einbaulage oberhalb des ungewollten Gegenstands 32c angeordnete Leuchtelemente 22c der Anzeigeeinheit 16c deaktiviert bleiben. Hierdurch wird ein Bediener über die Anwesenheit des ungewollten Gegenstands 32c informiert. Die Steuereinheit 18c fordert einen Bediener mittels der Anzeigeeinheit 16c zu einem Entfernen des ungewollten Gegenstands 32c aus dem Gargeschirraufstellbereich 14c auf.

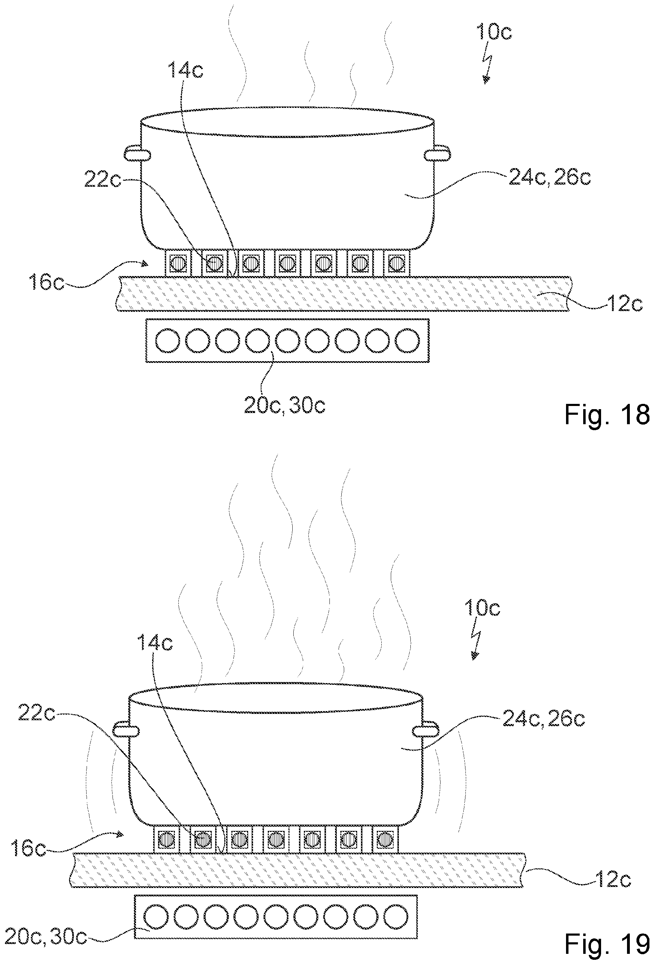

In einem Betriebszustand stellt ein Bediener eine als Gargeschirr 26c ausgebildete Aufstelleinheit 24c in dem Gargeschirraufstellbereich 14c auf (vgl. Fig. 17) und startet einen Garprozess. Mit zunehmender Temperatur der als Gargeschirr 26c ausgebildeten Aufstelleinheit 24c ändert die Steuereinheit 18c einen Aktivierungszustand der Anzeigeeinheit 16c. Im vorliegenden Ausführungsbeispiel betreibt die Steuereinheit 18c in dem Betriebszustand die Anzeigeeinheit 16c bis zu einem Erreichen einer ersten Temperaturschwelle mit geringer Intensität und/oder Helligkeit. Die erste Temperaturschwelle könnte beispielsweise bei 65°C liegen. In einem Bereich von der ersten Temperaturschwelle bis zu einer zweiten Temperaturschwelle aktiviert die Steuereinheit 18c in dem Betriebszustand die Anzeigeeinheit 16c mit mittlerer Intensität und/oder Helligkeit (vgl. Fig. 18). Die zweite Temperaturschwelle könnte beispielsweise bei 85°C liegen. In einem Bereich oberhalb der zweiten Temperaturschwelle aktiviert die Steuereinheit 18c in dem Betriebszustand die Anzeigeeinheit 16c mit höchster Intensität und/oder Helligkeit (vgl. Fig. 19). Hierdurch können insbesondere Brandverletzungen eines Bedieners vermieden werden.

In einem Betriebszustand stellt ein Bediener eine als Gargeschirr 26c ausgebildete Aufstelleinheit 24c in dem Gargeschirraufstellbereich 14c auf (nicht dargestellt) und startet einen Garprozess. Die Steuereinheit 18c betreibt die Anzeigeeinheit 16c in Abhängigkeit von einer Heizleitung und/oder von einer Temperatur. Im vorliegenden Betriebszustand betreibt die Steuereinheit 18c die Anzeigeeinheit 16c mit verschiedenen vordefinierten Farben für verschiedene Heizleistungen. Die Steuereinheit 18c betreibt die Anzeigeeinheit 16c in dem Betriebszustand mit verschiedenen vordefinierten Farben für verschiedene Temperaturen, welche sich insbesondere von den verschiedenen vordefinierten Farben für verschiedene Heizleistungen unterscheiden. Hierdurch kann ein Bediener insbesondere ständig über einen derzeitigen Status informiert werden.

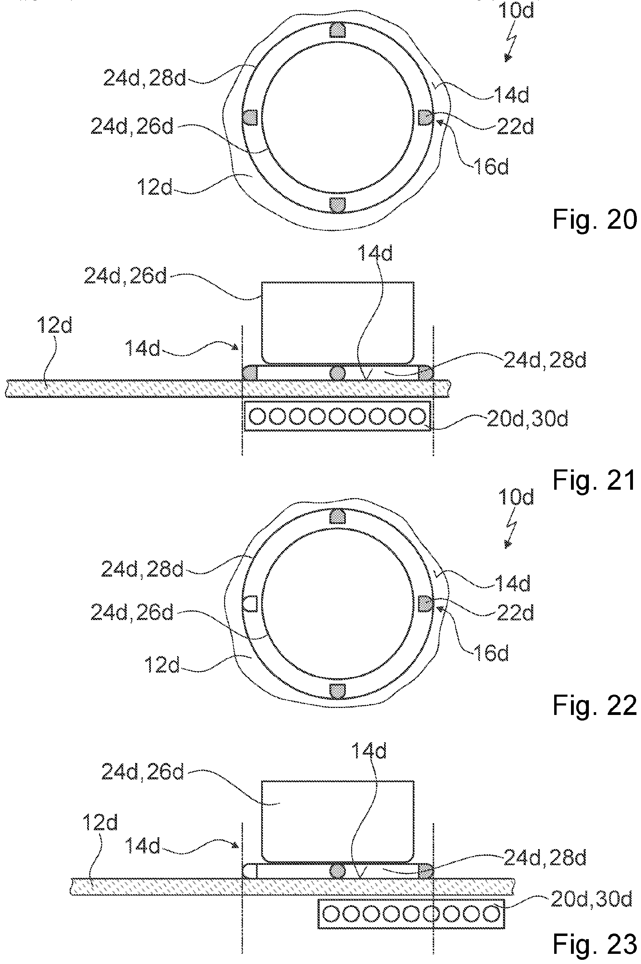

Fig. 20 zeigt ein Kochsystem 10d mit einer Kochfeldplatte 12d, welche einen Gargeschirraufstellbereich 14d definiert, und mit einem Induktionsheizelement 30d, welches einstückig mit einer Versorgungseinheit 20d zu einer Versorgung einer Anzeigeeinheit 16d des Kochsystems 10d ausgebildet ist. Im vorliegenden Ausführungsbeispiel ist das Induktionsheizelement 30d als ein freistehendes Induktionsheizelement 30d ausgebildet.

Eine Aufstelleinheit 24d weist eine Unterlegeinheit 28d auf. Die Unterlegeinheit 28d ist in einem Betriebszustand zwischen einem Gargeschirr 26d, welches insbesondere Teil der Aufstelleinheit 24d ist, und der Kochfeldplatte 12d angeordnet. Die Anzeigeeinheit 16d ist in der als Unterlegeinheit 28d ausgebildeten Aufstelleinheit 24d integriert.

Eine Steuereinheit 18d des Kochsystems 10d betreibt in Abhängigkeit von einem Bedienungsaufforderungsparameter die Anzeigeeinheit 16d. Der Bedienungsaufforderungsparameter ist eine Bedienaufforderung bezüglich eines Aufstellens in dem Gargeschirraufstellbereich 14d (vgl. Fig. 20 bis 23).

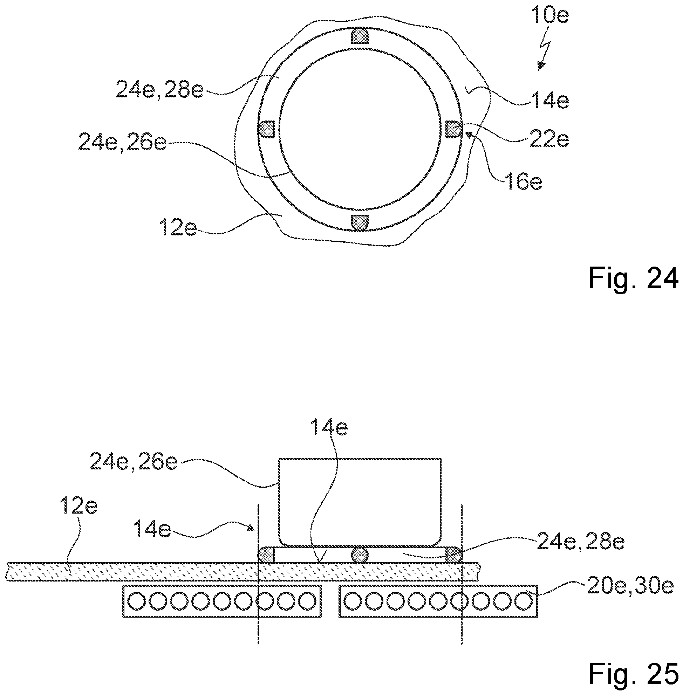

Fig. 24 und 25 zeigen ein Kochsystem 10e mit einer Kochfeldplatte 12e, welche einen Gargeschirraufstellbereich 14e definiert, und mit mehreren Induktionsheizelementen 30e. Im vorliegenden Ausführungsbeispiel sind die Induktionsheizelemente 30d in Form einer Matrix angeordnet. Eine Anzeigeeinheit 16e des Kochsystems 10e kann insbesondere durch zumindest zwei Induktionsheizelemente 30e mit Energie versorgt werden.

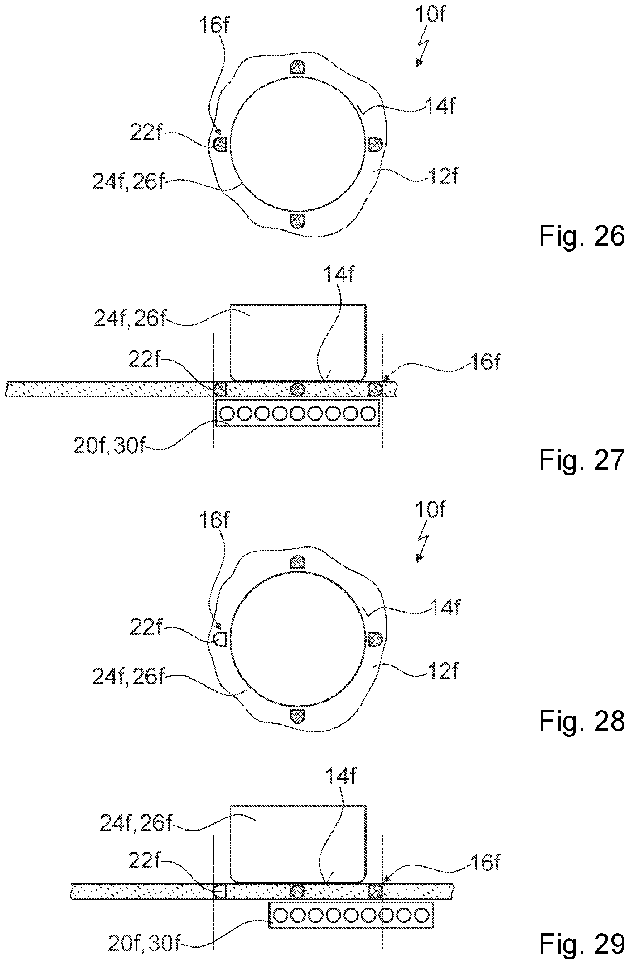

Fig. 26 zeigt ein Kochsystem 10f mit einer Kochfeldplatte 12f, welche einen Gargeschirraufstellbereich 14f definiert, und mit einem Induktionsheizelement 30f, welches in einer Einbaulage unterhalb der Kochfeldplatte 12f angeordnet ist. In einer Einbaulage ist unterhalb eines Nahbereichs des Gargeschirraufstellbereichs 14f eine Anzeigeeinheit 16f des Kochsystems 10f angeordnet. Die Anzeigeeinheit 16f ist bei einer senkrechten Betrachtung auf eine Haupterstreckungsebene der Kochfeldplatte 12f um das Induktionsheizelement 30f herum angeordnet.

Eine Steuereinheit 18f des Kochsystems 10f betreibt in Abhängigkeit von einem Bedienungsaufforderungsparameter die Anzeigeeinheit 16f. Der Bedienungsaufforderungsparameter ist eine Bedienaufforderung bezüglich eines Aufstellens in dem Gargeschirraufstellbereich 14f (vgl. Fig. 26 bis 29).

### Bezugszeichen

- 10: Kochsystem
- 12: Kochfeldplatte
- 14: Gargeschirraufstellbereich
- 16: Anzeigeeinheit
- 18: Steuereinheit
- 20: Versorgungseinheit
- 22: Leuchtelement
- 24: Aufstelleinheit
- 26: Gargeschirr
- 28: Unterlegeinheit
- 30: Induktionsheizelement
- 32: Gegenstand
- 34: Bedienerschnittstelle

## Patentansprüche

1. Kochsystem mit zumindest einer Kochfeldplatte (12a-f), welche zumindest einen Gargeschirraufstellbereich (14a-f) definiert, mit zumindest einer Anzeigeeinheit (16a-f), welche bei einer senkrechten Betrachtung auf eine Haupterstreckungsebene der Kochfeldplatte (12a-f) wenigstens teilweise in einem Nahbereich des Gargeschirraufstellbereichs (14a-f) angeordnet ist, wobei der Nahbereich einen zweidimensionalen Bereich bildet, welcher bei einer senkrechten Betrachtung auf eine Haupterstreckungsebene der Kochfeldplatte (12a-f) den Gargeschirraufstellbereich (14a-f) beinhaltet und welcher sich in einer beliebigen Richtung über eine Erstreckung von maximal 25% über eine maximale Erstreckung des Gargeschirraufstellbereichs (14a-f) in der Richtung hinaus erstreckt, und mit zumindest einer Steuereinheit (18a-f), die dazu vorgesehen ist, in wenigstens einem Betriebszustand die Anzeigeeinheit (16a-f) in Abhängigkeit von zumindest einem Bedienungsaufforderungsparameter zu betreiben, **gekennzeichnet durch** zumindest eine Versorgungseinheit (20a-f), welche in dem Betriebszustand jedes Leuchtelement (22a-f) der Anzeigeeinheit (16a-f) einzeln mit Energie versorgt.

2. Kochsystem nach einem der vorhergehenden Ansprüche, **gekennzeichnet durch** zumindest eine Aufstelleinheit (24a-f), welche in dem Betriebszustand in dem Gargeschirraufstellbereich (14a-f) angeordnet ist.

3. Kochsystem nach Anspruch 2, **dadurch gekennzeichnet, dass** die Aufstelleinheit (24a-f) zumindest ein Gargeschirr (26a-f) aufweist.

4. Kochsystem nach Anspruch 2 oder 3, **dadurch gekennzeichnet, dass** die Aufstelleinheit (24d-e) zumindest eine Unterlegeinheit (28d-e) aufweist, welche in dem Betriebszustand zwischen zumindest einem Gargeschirr (26d-e) und der Kochfeldplatte (12d-e) angeordnet ist.

5. Kochsystem nach einem der Ansprüche 2 bis 4, **dadurch gekennzeichnet, dass** die Anzeigeeinheit (16a-e) wenigstens teilweise in der Aufstelleinheit (24a-e) integriert ist.

6. Kochsystem nach einem der vorhergehenden Ansprüche, **dadurch gekennzeichnet, dass** die Anzeigeeinheit (16f) in dem Betriebszustand wenigstens teilweise unterhalb des Nahbereichs des Gargeschirraufstellbereichs (14f) angeordnet ist.

7. Kochsystem nach einem der vorhergehenden Ansprüche, **gekennzeichnet durch** zumindest ein Induktionsheizelement (30a-f), welches in dem Betriebszustand unterhalb der Kochfeldplatte (12a-f) angeordnet ist und die Anzeigeeinheit (16a-f) mit Energie versorgt.

8. Kochsystem zumindest nach den Ansprüchen 2 und 7, **dadurch gekennzeichnet, dass** das Induktionsheizelement (30a-f) bei einer senkrechten Betrachtung auf eine Haupterstreckungsebene der Kochfeldplatte (12a-f) in dem Betriebszustand bei einem Aufstellen der Aufstelleinheit (24a-f) ausschließlich in dem Nahbereich des Gargeschirraufstellbereichs (14a-f) angeordnete Leuchtelemente (22a-f) der Anzeigeeinheit (16a-f) aktiviert.

9. Kochsystem nach einem der vorhergehenden Ansprüche, **dadurch gekennzeichnet, dass** der Bedienungsaufforderungsparameter eine Bedienaufforderung bezüglich eines Aufstellens in dem Gargeschirraufstellbereich (14a; 14d-f) ist.

10. Kochsystem nach einem der vorhergehenden Ansprüche, **dadurch gekennzeichnet, dass** der Bedienungsaufforderungsparameter eine Bedienaufforderung bezüglich eines Garprozesses ist.

11. Kochsystem nach einem der vorhergehenden Ansprüche, **dadurch gekennzeichnet, dass** der Bedienungsaufforderungsparameter eine Bedienaufforderung bezüglich eines Zubereitungsrezepts ist.

12. Kochsystem nach einem der vorhergehenden Ansprüche, **dadurch gekennzeichnet, dass** der Bedienungsaufforderungsparameter eine Bedienaufforderung zu einem Befreien des Gargeschirraufstellbereichs (14c) von ungewollten Gegenständen (32c) ist.

13. Verfahren zu einem Betrieb eines Kochsystems (10a-f), insbesondere nach einem der vorhergehenden Ansprüche, mit zumindest einer Kochfeldplatte (12a-f), welche zumindest einen Gargeschirraufstellbereich (14a-f) definiert, und mit zumindest einer Anzeigeeinheit (16a-f), welche bei einer senkrechten Betrachtung auf eine Haupterstreckungsebene der Kochfeldplatte (12a-f) wenigstens teilweise in einem Nahbereich des Gargeschirraufstellbereichs (14a-f) angeordnet ist, wobei der Nahbereich einen zweidimensionalen Bereich bildet, welcher bei einer senkrechten Betrachtung auf eine Haupterstreckungsebene der Kochfeldplatte (12a-f) den Gargeschirraufstellbereich (14a-f) beinhaltet und welcher sich in einer beliebigen Richtung über eine Erstreckung von maximal 25% über eine maximale Erstreckung des Gargeschirraufstellbereichs (14a-f) in der Richtung hinaus erstreckt, wobei in wenigstens einem Betriebszustand mittels der Anzeigeeinheit (16a-f) zumindest ein Bedienungsaufforderungsparameter ausgegeben wird, **dadurch gekennzeichnet, dass** in dem Betriebszustand jedes Leuchtelement (22a-f) der Anzeigeeinheit (16a-f) einzeln mit Energie versorgt wird.

## Claims

1. Cooking system comprising at least one hob plate (12a-f) defining at least one region for setting down a cooking pot (14a-f), with at least one display unit (16a-f) which is arranged at least partially in a region close to the region (14a-f) for setting down a cooking pot, when being viewed perpendicularly to a main extension plane of the hob plate (12a-f), wherein the region close to the region for setting down a cooking pot forms a two-dimensional region, which, when being viewed perpendicularly to a main extension plane of the hob plate (12a-f), contains the region for setting down a cooking pot (14a-f) and which extends in any direction, over an extent of a maximum of 25% beyond a maximum extent of the region for setting down a cooking pot (14a-f) in the direction and with at least one control unit (18a-f) which is provided to operate the display unit (16a-f) in at least one operating state, as a function of at least one operation request parameter, **characterised by** at least one supply unit (20a-f) which in the operating state individually supplies each lighting element (22a-f) of the display unit (16a-f) with energy.

2. Cooking system according to one of the preceding claims, **characterised by** at least one setting down unit (24a-f) which in the operating state is arranged in the region for setting down a cooking pot (14a-f).

3. Cooking system according to claim 2, **characterised in that** the setting down unit (24a-f) comprises at least one cooking pot (26a-f).

4. Cooking system according to claim 2 or 3, **characterised in that** the setting down unit (24d-e) comprises at least one pad unit (28d-e), which in the operating state is arranged between at least one cooking pot (26d-e) and the hob plate (12d-e).

5. Cooking system according to one of claims 2 to 4, **characterised in that** the display unit (16a-e) is at least partially integrated in the setting down unit (24a-e).

6. Cooking system according to one of the preceding claims, **characterised in that** in the operating state the display unit (16f) is arranged at least partially below the region close to the region for setting down a cooking pot (14f).

7. Cooking system according to one of the preceding claims, **characterised by** at least one induction heating element (30a-f) which in the operating state is arranged below the hob plate (12a-f) and supplies the display unit (16a-f) with energy.

8. Cooking system according to claims 2 and 7, **characterised in that** in the operating state the induction heating element (30a-f), when being viewed in a vertical direction down onto a main extension plane of the hob plate (12a-f), when the setting down unit (24a-f) is set down, exclusively activates lighting elements (22a-f) of the display unit (16a-f) arranged in the region close to the region for setting down a cooking pot (14a-f).

9. Cooking system according to one of the preceding claims, **characterised in that** the operation request parameter is a user request relative to setting down in the region for setting down a cooking pot (14a; 14d-f).

10. Cooking system according to one of the preceding claims, **characterized in that** the operation request parameter is a user request relative to a cooking process.

11. Cooking system according to one of the preceding claims, **characterised in that** the operation request parameter is a user request relative to a cooking recipe.

12. Cooking system according to one of the preceding claims, **characterised in that** the operation request parameter is a user request to remove undesired objects (32c) from the region for setting down a cooking pot (14c).

13. Method for operating a cooking system (10a-f), in particular according to one of the preceding claims, comprising at least one hob plate (12a-f) defining at least one region for setting down a cooking pot (14a-f) and at least one display unit (16a-f) which is arranged at least partially in a region close to the region for setting down a cooking pot (14a-f), when being viewed perpendicularly to a main extension plane of the hob plate (12a-f), wherein the region close to the region for setting down a cooking pot forms a two-dimensional region, which, when being viewed perpendicularly to a main extension plane of the hob plate (12a-f), contains the region for setting down a cooking pot (14a-f) and which extends in any direction, over an extent of a maximum of 25% beyond a maximum extent of the region for setting down a cooking pot (14a-f) in the direction, wherein at least one operation request parameter is output by means of the display unit (16a-f) in at least one operating state, **characterised in that** each lighting element (22a-f) of the display unit (16a-f) is individually supplied with energy.

## Revendications

1. Système de cuisson avec au moins une plaque de cuisson (12a-f) qui définit au moins une zone de positionnement d'ustensiles de cuisson (14a-f) avec au moins une unité d'affichage (16a-f) qui est disposée au moins partiellement à proximité de la zone de positionnement d'ustensiles de cuisson (14a-f) quand on regarde perpendiculairement le plan d'extension principal de la plaque de cuisson (12a-f), la proximité formant une zone bidimensionnelle qui contient la zone de positionnement d'ustensiles de cuisson (14a-f) quand on regarde perpendiculairement le plan d'extension principal de la plaque de cuisson (12a-f), et qui s'étend dans une direction privilégiée sur une dimension de maximum 25 % de plus que la dimension maximale de la zone de positionnement d'ustensiles de cuisson (14a-f) dans cette direction, et avec au moins une unité de commande (18a-f) qui est prévue pour actionner l'unité d'affichage (16a-f) dans au moins un état de fonctionnement en fonction d'au moins un paramètre de commande, **caractérisé par** au moins une unité d'alimentation (20a-f) qui alimente en énergie individuellement chaque élément d'éclairage (22a-f) de l'unité d'affichage (16a-f) en état de fonctionnement.

2. Système de cuisson selon l'une des revendications précédentes, **caractérisé par** au moins une unité de positionnement (24a-f) qui est disposée en état de fonctionnement dans la zone de positionnement d'ustensiles de cuisson (14a-f).

3. Système de cuisson selon la revendication 2, **caractérisé en ce que** l'unité de positionnement (24a-f) présente au moins un ustensile de cuisson (26a-f).

4. Système de cuisson selon la revendication 2 ou 3, **caractérisé en ce que** l'unité de positionnement (24d-e) présente au moins une unité de support (28d-e) qui est disposée en état de fonctionnement entre au moins un ustensile de cuisson (26d-e) et la plaque de cuisson (12d-e).

5. Système de cuisson selon l'une des revendications 2 à 4, **caractérisé en ce que** l'unité d'affichage (16a-e) est au moins partiellement intégrée dans l'unité de positionnement (24a-e).

6. Système de cuisson selon l'une des revendications précédentes, **caractérisé en ce que** l'unité d'affichage (16f) est disposée en état de fonctionnement au moins partiellement sous la proximité de la zone de positionnement d'ustensiles de cuisson (14f).

7. Système de cuisson selon l'une des revendications précédentes, **caractérisé par** au moins un élément chauffant par induction (30a-f) qui, en état de fonctionnement, est disposé sous la plaque de cuisson (12a-f) et alimente l'unité d'affichage (16a-f) en énergie.

8. Système de cuisson au moins selon les revendications 2 et 7, **caractérisé en ce que** l'élément chauffant par induction (30a-f), quand on regarde perpendiculairement le plan d'extension principal de la plaque de cuisson (12a-f), en état de fonctionnement, lors d'un positionnement de l'unité de positionnement (24a-f), active des éléments d'éclairage (22a-f) de l'unité d'affichage (16a-f) disposés à proximité de la zone de positionnement d'ustensiles de cuisson (14a-f).

9. Système de cuisson selon l'une des revendications précédentes, **caractérisé en ce que** le paramètre de commande est une commande relative à un positionnement dans la zone de positionnement d'ustensiles de cuisson (14a ; 14d-f).

10. Système de cuisson selon l'une des revendications précédentes, **caractérisé en ce que** le paramètre de commande est une commande relative à un processus de cuisson.

11. Système de cuisson selon l'une des revendications précédentes, **caractérisé en ce que** le paramètre de commande est une commande relative à une recette de préparation.

12. Système de cuisson selon l'une des revendications précédentes, **caractérisé en ce que** le paramètre de commande est une commande d'évacuation d'objets indésirables (32c) de la zone de positionnement d'ustensiles de cuisson (14c).

13. Procédé de fonctionnement d'un système de cuisson (10a-f), en particulier selon l'une des revendications précédentes, avec au moins une plaque de cuisson (12a-f), qui définit au moins une zone de positionnement d'ustensiles de cuisson (14a-f), et avec au moins une unité d'affichage (16a-f) qui, quand on regarde perpendiculairement le plan d'extension principal de la plaque de cuisson (12a-f), est disposée au moins en partie à proximité de la zone de positionnement d'ustensiles de cuisson (14a-f), la proximité formant une zone bidimensionnelle qui contient la zone de positionnement d'ustensiles de cuisson (14a-f) quand on regarde perpendiculairement le plan d'extension principal de la plaque de cuisson (12a-f) et qui s'étend dans une direction privilégiée sur une dimension de maximum 25 % de plus que la dimension maximale de la zone de positionnement d'ustensiles de cuisson (14a-f) dans cette direction, au moins un paramètre de commande étant émis dans au moins un état de fonctionnement au moyen de l'unité d'affichage (16a-f), **caractérisé en ce qu'**en état de fonctionnement, chaque élément d'éclairage (22a-f) de l'unité d'affichage (16a-f) est alimenté individuellement en énergie.
